# EUROPEAN PATENT APPLICATION

(11) **EP 1 147 976 A1**
(43) Date of publication of application: **24.10.2001**
(21) Application number: 00830295.2
(22) Date of filing: 18.04.2000
(51) Int. Cl.: B62K 25/02

(54) **Quickly demountable hub set for a cycle wheel**

(71) Applicant: Meles, Andrea, 22071 Cadorago (CO) (IT); Cavallari, Bruno, 10095 Grugliasco (TO) (IT); Rizzuti, Alessandro, 10090 Rosta (TO) (IT)
(72) Inventor: Cavallari, Bruno, 10095 Grugliasco (TO) (IT); Rizzuti, Alessandro, 10090 Rosta (TO) (IT)
(74) Representative: Robba, Pierpaolo

(57) **Abstract**

A quickly demountable hub assembly for a cycle wheel mounted on the arm of a single-tube fork, comprising: a hub (1) having an axial bore (10) including an axial conical seat (11); a support (20) comprising a conical portion (22) which can fit into said conical seat and is provided with an enlarged head (19); and a resilient clamp (8) arranged to engage said enlarged head (19) under the control of a cam lever (9).

## Description

The present invention concerns a quickly demountable hub set for a cycle wheel having a single-arm fork and a conventional chain transmission mechanism.

The invention finds its particular and advantageous application in the rear wheel of a bicycle, as it will be disclosed in more detail hereinafter, but this is not to be taken in limiting sense, since the invention can also be applied to the front wheel of bicycles and light motor cycles.

Bicycles are known having a frame provided with so called single-arm forks, that is wheel bearing members that are shaped as a single cantilevered arm instead of having a fork structure with two arms of which the ends are engaged by the ends of the wheel hub.

Bicycles equipped with a system for quickly demounting both the front and the rear wheels are also known and wide spread, see for instance US-A-4 906 053. They are particularly advantageous for a quick wheel substitution, for instance for the tube repair or the bicycle transport, e.g. on a motor vehicle roof.

A drawback of the known quick demounting systems is that, to remove the rear wheel, it is necessary to loosen the transmission chain and take it off from the free wheel. The operation is not easy and makes demounting time longer. Moreover, it is often necessary also to loosen the brake linings or shoes which, in the known systems, interfere with the removal of the wheel from the fork.

The object of the present invention is to overcome the above mentioned limits of the prior art, and in particular to provide a quickly demountable hub assembly for a cycle wheel which allows removing the wheel without interventions on the chain.

These objects are attained by an improved quickly demountable hub assembly for a cycle wheel according to claim 1.

Further advantageous features are the subject matter of the dependent claims.

The invention will now be described with reference to the accompanying drawings, relating to a preferred embodiment of the invention, devoid of any limiting character, in which:
- Fig. 1 shows the hub assembly according to the invention in mounted condition, and
- Fig. 2 shows the hub assembly of Fig. 1 in demounted condition.

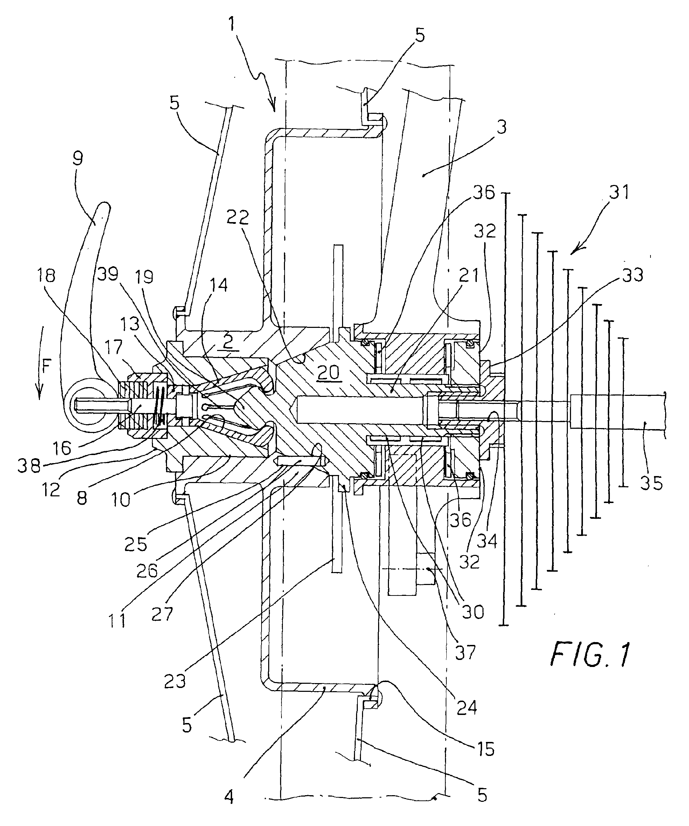

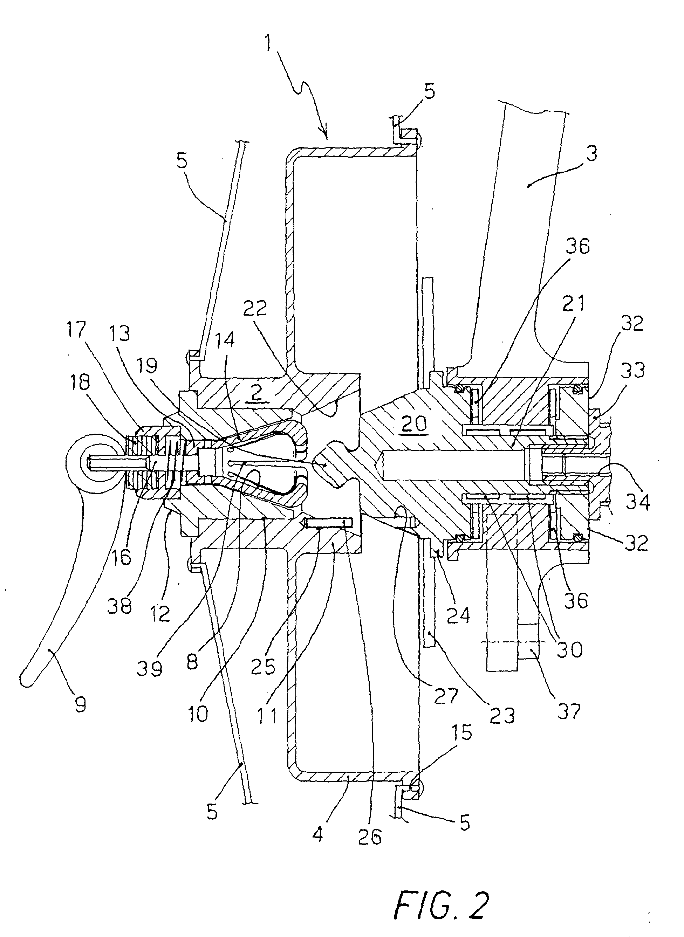

With reference to Figs. 1 and 2, the assembly according to the invention comprises a hub 1, connected to arm 3 of the single-arm fork of a bicycle frame.

Hub 1 comprises a body 2 and a hollow cylindrical portion or bell 4, of which the turned peripheral edge presents holes 15 into which the wheel spokes engage. Body 2 has formed therein an axial bore with a cylindrical central portion 10 joined with a conical portion or seat 11 into which a support 20 fits. Said support 20 includes a conical engagement portion 22 joined with a cylindrical portion 21. Cylindrical portion 21 is axially bored and is mounted on arm 3 of the single-arm fork through roller bearings 30. Moreover, sprocket wheel set 31 for the chain transmitting motion from the pedals is mounted on said cylindrical portion 21.

Support 20 is moreover secured to arm 3 through a left-thread ring nut 32 and a right-thread lock nut 33 which is screwed into the axial bore provided in portion 21 of support 20. Lock nut 33 has a threaded bore 34 for fastening a pin 35 onto which the derailleur for the speed gear is mounted. Said derailleur is also secured to arm 3 of the single-arm fork so that its rotation during rotation of hub 1 is prevented.

Two roller thrust bearings 36 are moreover arranged between arm 3 and body 20 and ring nut 32.

Support 20 fits into conical seat 11 and it is retained in body 2 through an enlarged head 19 which engages the jaws of a resilient clamp 8. Clamp 8 is mounted in bore 10 through a hollow cylindrical sleeve 12 screwed in bore 10 and having internally a cylindrical portion 13 and a conical portion 14 where resilient clamp 8 is housed.

Preferably resilient clamp 8 is a substantially bell-shaped metal member and has a set of slots 39 allowing its expansion and contraction. Clamp 8 is controlled through a cam lever 9 pivotally mounted at the end of a tie rod 16 secured at the end of clamp 8 and projecting from hub 1. A spring 38 is wound on tie rod 16.

A ring nut 17, preferably made of aluminium and screwed into sleeve 12 or into a member integral therewith, and a deformable plastic insert 18 are interposed between the cam portion of lever 9 and portion 13 of sleeve 12.

Lever 9 can be rotated by about 180° thereby exerting an axial displacement on clamp 8 and, consequently on support 20 within body 2.

Support 20 has a circumferential portion 24 for the fastening of disk 23 of the disk brake, and the tail portion of fork arm 3 has holes 37 for the fastening of the brake clamp (not shown). Three pins 36 arranged at 120° relative to each other project from peripheral holes 25 provided on the periphery of body 2 to allow the coupling with corresponding circular seats 27 provided in support 20, when the latter is being secured to hub 1. Advantageously, the number of circular seats 27 is such that those seats are arranged side by side to allow automatic centring of the hub during mounting.

According to the invention, the match and the movement between the two coupled members, i. e. body 2 and support 20, which conventionally are obtained through the use of a key, are ensured by the male-female toothing system consisting of the aforementioned pins 26 co-operating with circular seat 27. Such a system allows complying with a proportional rotation ratio between the two members, and moreover it does not limit the coupling to a single position, thereby making the wheel replacement operation still faster.

Hereinafter the demounting of the hub assembly according to the invention will be described. Such demounting comprises, in two simple steps, the actuation of cam lever 9 and the wheel removal from the hub.

By moving lever 9 from the position shown in Fig. 1 to the position shown in Fig. 2 (arrow F), lever 9 is released, support 20 and body 2 are decoupled and axially shifted to the right with reference to the drawings, and head 13 of support 20 can be removed from clamp 9 (which can now expand) by pulling the wheel to the left with reference to the drawings.

Conversely, when mounting the wheel, head 13 of support 20 can be inserted into clamp 8 and, by acting in the opposed direction to that shown by arrow F, clamp 8 will be closed by bringing the hub to the condition shown in Fig. 1, in which the conical surfaces of support 20 and body 2 co-operate for fastening the different components.

Even if the invention has been disclosed with reference to a presently preferred embodiment, other applications and modifications can be envisaged and they are included in the scope of the invention, as it will be clear for the skilled in the art.

## Claims

1. A quickly demountable hub assembly for a cycle wheel mounted on the arm of a single-tube fork, comprising:
- a hub (1) having an axial bore (10) including an axial conical seat (11);
- a support (20) comprising a cylindrical portion (21) mounted on the arm of said single-tube fork and bearing at least one sprocket wheel for the chain, and a conical portion (22) which can be inserted into said conical seat (11) and has an enlarged head (19);
- a resilient clamp (8) mounted in said bore (10) through a cylindrical sleeve (12) and arranged to engage said enlarged head (9), the opening and closing of said clamp being controlled by a cam lever (9).

2. A hub assembly according to claim 1, **characterised in that** said hub (1) comprises a body (2) and a cylindrical hollow portion (4) of which the turned peripheral edge presents bores (15) where the ends of the wheel spokes (5) engage.

3. A hub assembly according to claim 1, **characterised in that** said support (20) has a circumferential portion (24) provided with holes for fastening the disk of the disk brake.

4. A hub assembly according to any preceding claim, **characterised in that** said body (2) presents peripheral holes (25) from which three pins (26) project for coupling with corresponding circular seats provided in the support (20) when the latter is being secured to the hub.

5. A hub assembly according to any preceding claim, **characterised in that** said single-tube fork is mounted on a roller bearing on said cylindrical portion (21).

6. A hub assembly according to any preceding claim, **characterised in that** said clamp (8) comprises a substantially bell-shaped hollow body provided with slots (39) for allowing expansion and contraction of said clamp.
